# EUROPEAN PATENT SPECIFICATION

(11) **EP 3 196 639 B1**
(45) Date of publication and mention of the grant of the patent: **08.04.2020**
(21) Application number: 16000138.4
(22) Date of filing: 21.01.2016
(51) Int. Cl.: G01N 27/12

(54) **GAS SENSOR WITH BRIDGE STRUCTURE**
GASSENSOR MIT BRÜCKENSTRUKTUR
CAPTEUR DE GAZ AVEC STRUCTURE DE PONT

(43) Date of publication of application: 26.07.2017
(60) Divisional application: 19187142.5
(73) Proprietor: Sensirion AG, 8712 Stäfa (CH)
(72) Inventor: Kuemin, Cyrill, 8712 Stäfa (CH); Merz, Matthias, 8712 Stäfa (CH); Hitzbleck, Martina, 8712 Stäfa (CH); Moeller, Nicolas, 8712 Stäfa (CH)
(74) Representative: Sutter, Kurt

(56) References cited:
- EP-A1- 2 533 037
- EP-A1- 2 975 386
- WO-A1-94/10822
- GB-A- 2 422 017
- GB-A- 2 523 788
- US-A1- 2004 075 140
- US-A1- 2007 234 801
- US-A1- 2015 021 716
- MULLER G ET AL: "A MEMS toolkit for metal-oxide-based gas sensing systems", THIN SOLID FILMS, ELSEVIER, AMSTERDAM, NL, vol. 436, no. 1, 22 July 2003 (2003-07-22) , pages 34-45, XP004431389, ISSN: 0040-6090, DOI: 10.1016/S0040-6090(03)00523-6

## Description

### Technical Field

The invention relates to a gas sensor comprising a recess or opening arranged in a substrate and a hotplate located over said recess or opening. A patch of sensing material, such as a metal oxide, is located on the hotplate, and electrodes for measuring an electrical property of the patch of sensing material are provided.

### Background Art

US 2014/0208830 describes a gas sensor having a membrane spanning an opening in a silicon substrate. The membrane forms a hotplate and has an integrated tungsten heater. In addition, a platinum layer, separated from the tungsten heater by a dielectric layer, forms electrodes for measuring the resistance of a patch of sensing material.

US 2015/0021716A1 discloses a low power micro semiconductor gas sensor. The micro semiconductor gas sensor includes a substrate having an air gap, a peripheral portion provided on the substrate and comprising electrode pads, a sensor portion comprising sensing electrodes connected from the electrode pads and a sensing film on the sensing electrodes and floating on the air gap, and a connection portion comprising conductive wires electrically connecting the electrode pads and the sensing electrodes to each other, and connecting the peripheral portion and the sensor portion to one another.

US 2007/0234801 A1 discloses a sensor comprising a first metallization plane located on a substrate, a passivation layer that is structured by contact holes and is applied to said substrate and a sensitive ceramic layer formed by thick-film technology on the passivation layer and in the contact holes. The aim is to improve the adhesion of the ceramic layer. To achieve this, the sensor is provided with an adhesion promoter layer that is configured as a second metallization plane and is located between the passivation layer and the ceramic layer.

WO 94/10822 discloses a design and fabrication methodology, for silicon micromachined micro-hotplates which are manufactured using commercial CMOS foundries techniques with additional post-fabrication processing. The micro-hotplates are adaptable for a host of applications. The methodology for the fabrication of the micro-hotplates is based on commercial CMOS compatible micromachining techniques. An embodiment shows a heating element that can be used as resistive heater and as a temperature sensor.

### Disclosure of the Invention

The problem to be solved by the present invention is to provide a gas sensor of this type with high sensitivity at low operating power.

This problem is solved by the gas sensor of claim 1. Accordingly, the gas sensor comprises:
- A substrate: This substrate is e.g. a silicon substrate, and it forms the mechanical frame of the sensor. It can optionally comprise circuitry integrated thereon, in particular CMOS circuitry, and more particularly CMOS circuitry adapted to control the heater and to read out the gas sensor.
- A recess or opening arranged in said substrate: This recess or opening is located under a thin structure forming the hotplate, thermally separating the hotplate from the substrate.
- A bridge extending over said recess or opening and being anchored in said substrate: This bridge forms the thin structure with the hotplate, i.e. the bridge comprises the thin structure with the hotplate. By spanning the recess or opening by means of a bridge and not a continuous thin film cover, the thermal conductance between the hotplate and the substrate is reduced, thus allowing to achieve high temperatures at low operating power. Further, the thermal mass is reduced, which allows to vary the temperature of the hotplate quickly. The bridge comprises at least a first and a second metal layer separated by at least one dielectric layer. The dielectric layer is advantageously of at least one material selected from the group consisting of silicon oxide, silicon nitride, Al₂O₃ and Ta₂O₅. In another advantageous embodiment, the bridge is being anchored at opposite sides in said substrate.
- A patch of sensing material arranged on said hotplate: This sensing material is a material changing its electrical properties depending on the composition of the surrounding gas. Advantageously, the sensing material is a metal oxide.
- A heater located in said hotplate: This heater is used for heating the hotplate to an operating temperature of the sensing material. It is formed by the first metal layer of the bridge.
- Electrodes located in said hotplate: These electrodes are located for measuring an electrical property of said patch of sensing material, namely an electrical property depending on at least one gas analyte to be detected. The electrodes are formed at least in part by the second metal layer of the bridge. Advantageously, all said electrodes are formed by the second metal layer.
- A temperature sensor arranged in the hotplate. This temperature sensor is adapted to measure the temperature of the hotplate, and its signal can be used for refining the measurement and/or for controlling the hotplate temperature.
- At least two parallel neighbouring bridges. The at least two neighbouring bridges comprise, in particular consist of, a central region forming said hotplate and two arms of unequal length extending between said central region and said substrate, wherein the central regions of the neighbouring bridges are, in a direction along the bridges offset in respect to each other.

The first metal layer is advantageously a platinum or tungsten layer. Both of these materials are well suited for withstanding high heater temperatures.

The second layer is advantageously a platinum or gold layer. This chemically inert metal is well suited for forming stable electrodes.

In an advantageous geometry, the bridge comprises a central region forming said hotplate and two arms extending between said central region and said substrate. The diameter of the central region is larger than the minimum diameter of each of said arms, which further reduces the thermal conductance between the hotplate and the substrate while still providing a hotplate with a large area for receiving the sensing material.

Advantageously, the bridge consists of said central region and said two arms, i.e. the two arms form the sole connections between the central region and the substrate, thereby reducing the thermal conductance even further.

The central region has advantageously circular circumference, which gives it a shape well suited for receiving a liquid precursor of the sensing material during the manufacturing process. A definition of the term "circular circumference" is provided below.

Alternatively, the central region can have non-circular circumference, such as rectangular or polygonal circumference.

Alternatively, or in addition thereto, the central region can have an edge patterned with a plurality of recesses and/or projections (with the exception of the sections where the central region is connected to the arms of the bridge and, optionally, to bars stabilizing it). Such an edge increases the total length of the circumference, thereby improving the lateral confinement (due to surface tension effects) of the liquid precursor of the sensing material during the manufacturing process ("pinning"). In addition or alternatively, the edge may improve the anchoring of the patch if the liquid precursor of the sensing material is drawn into the bays formed by the recesses in the edge, in particular if the recesses are narrow.

In yet another embodiment, the sensor comprises:
- At least two electrode leads extending between said electrodes and said substrate. These electrode leads extend through a first one of said two arms.
- At least two temperature sensor leads extending between said temperature sensor and said substrate. These temperature sensor leads extend through a second one of said arms.

This design separates the leads for the temperature sensor and the electrodes, providing a compact design and less crosstalk.

In a simple layout, the electrodes are coaxial, i.e. they are arranged around a common center. Advantageously, they comprise a center electrode and an outer electrode, which are typically electrically insulated from each other. The center electrode is circular, and the outer electrode extends along an azimuthal angle of at least 240°, in particular of at least 270°, around the center electrode.

Alternatively, the electrodes are interdigital electrodes.

In an advantageous embodiment, the temperature sensor and at least one of the electrodes, in particular both electrodes, are formed by the same one of said metal layers, namely the second metal layer.

In another embodiment, a first one of the electrodes is arranged at a layer below a second one of the electrodes. Hence, the electrodes are formed by different metal layers, which allows for a compact design of the device.

Advantageously, the first electrode is formed by the first metal layer and the second electrode is formed by the second metal layer, i.e. the first metal layer is used for the heater as well as for one of the electrodes.

Alternatively, the first electrode is formed by a third metal layer separate from the first and second metal layers, while the second electrode is formed by the second metal layer, thereby arranging the two electrodes and the heater in three different metal layers.

Advantageously, the first electrode is arranged at the bottom of a well extending all the way up through a topmost of the metal and dielectric layers of the hotplate. The patch of sensing material extends into this well, thereby establishing a good electrical contact also to the first electrode.

The temperature sensor is advantageously separate from the heater, i.e. it formed by a structure different from the heater. Since the heater is exposed to high electrical currents at elevated temperatures, it is subject to electromigration effects, for which reason its electrical properties tend to drift. By making the temperature sensor a separate device, its long-term stability is improved.

Alternatively, the temperature sensor can be formed by the heater, in which case the heater is advantageously formed by tungsten because tungsten has low susceptibility to electromigration.

In another advantageous embodiment, the sensor comprises at least one opening extending though the hotplate. Such an opening increases the adhesion of the sensing material layer, thereby reducing the risk of delamination.

Other advantageous embodiments are listed in the dependent claims as well as in the description below.

### Brief Description of the Drawings

The invention will be better understood and objects other than those set forth above will become apparent from the following detailed description thereof. Such description refers to the annexed drawings, wherein:
Fig. 1 a top view of a gas sensor with a first device geometry comprising bridges with arms of equal length, wherein such bridges with arms of equal length are not covered by the claims;
Fig. 2 a top view of the central part of a bridge of the gas sensor,
Fig. 3 a sectional view along line III-III of Fig. 2,
Fig. 4 shows the structures in the second metal layer of the embodiment of Fig. 2,
Fig. 5 shows the structures in the first metal layer of the embodiment of Fig. 2,
Fig. 6 is an alternative embodiment of the structures in the first metal layer,
Fig. 7 is a top view of the central part of a bridge of another embodiment of the gas sensor,
Fig. 8 is a sectional view of the hotplate along line VIII-VIII of Fig. 7,
Fig. 9 is a top view of the central part of a bridge of yet another embodiment of the gas sensor,
Fig. 10 is a sectional view of the hotplate along line X-X of Fig. 9,
Fig. 11 is a top view of the central part of a bridge of yet another embodiment of the gas sensor,
Fig. 12 is a sectional view of the hotplate along line XII-XII of Fig. 11,
Fig. 13 is a top view of the central part of a bridge of yet another embodiment of the gas sensor,
Fig. 14 is a sectional view of the hotplate along line XIV-XIV of Fig. 11,
Fig. 15 is a sectional view of the hotplate of yet another embodiment of the gas sensor,
Fig. 16 is a sectional view of the hotplate of yet another embodiment of the gas sensor,
Fig. 17 is a top view of the central part of a bridge of yet another embodiment of the gas sensor,
Fig. 18 a top view of a gas sensor with a second device geometry and,
Fig. 19 a top view of a gas sensor with a third device geometry,
Fig. 20 shows a detail from Fig. 19, and
Fig. 21 shows part of a bridge with a non-circular central region.

All top views of the central part of the bridge show the patch of sensing material in transparent manner, with the structures below it in dashed or dotted lines. The drawings are not to scale.

### Modes for Carrying Out the Invention

### Definitions:

A "platinum layer" or a "tungsten layer" is understood to be a layer comprising at least 50%, in particular at least 90%, of said material (platinum or tungsten). The layer is typically not a continuous layer, but a structured layer e.g. forming one or more metal leads.

Similarly, a heater "of tungsten" designates a heater comprising at least 50%, in particular at least 90%, of tungsten.

The term "circular circumference" expresses that the circumferential edge of the central region (with the exception of the sections where the central region is connected to the arms of the bridge) lies within a circular ring with said ring having a radial width of no more than 20%, in particular no more than 10%, of its radius.

An "edge patterned with a plurality of recesses and/or projections" is an edge forming a series of recesses and projections (bays and fingers), such that the edge follows a tortuous path turning alternatingly inwards and outwards.

A "circular electrode" is an electrode whose circumferential edge lies within a circular ring with said ring having a radial width of no more than 20%, in particular no more than 10%, of its radius.

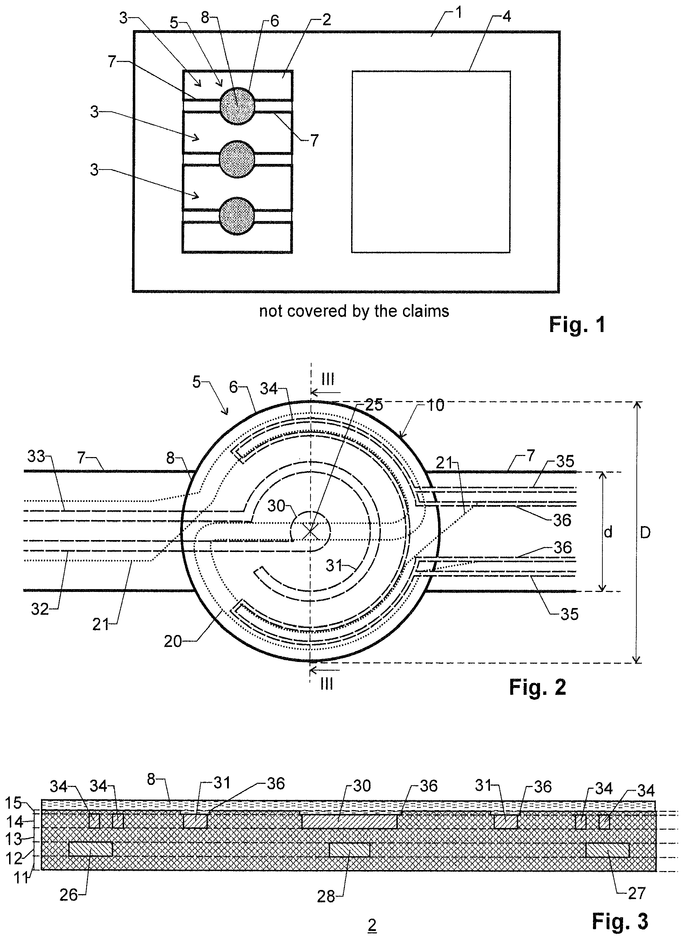

Terms such as "top", "bottom", "above", "below" are used in the sense that the side of the substrate that carries the bridges is the top side of the substrate. In this sense, the sensing patch of the embodiment of Fig. 3 is e.g. arranged at the top of the hotplate, above the electrodes.

The terms "radial" and "azimuthal" describe directions in respect to the center point of the hotplate, with "radial" designating a direction towards or away from the center point and "azimuthal" a direction tangential to a circle around the center point.

Device geometry 1 comprising bridges with arms of equal length (not covered by the claims):
Fig. 1 shows a gas sensor with a first device geometry having a substrate 1, in particular a substrate of silicon. Substrate 1 has an opening or recess 2 arranged therein. One or more bridges 3 span this opening or recess.

Further, substrate 1 carries integrated CMOS circuitry 4, e.g. including circuitry for driving heaters and processing signals from the electrodes and temperature sensors as described below. Advantageously, processing circuitry 4 is integrated in CMOS technology since the whole device described herein is compatible with current CMOS manufacturing processes. Having the CMOS circuitry on-board of substrate 1 allows to reduce the number of bonds to the substrate and to increase signal-to-noise ratio.

Each bridge 3 comprises a central region 5 forming a hotplate 6 and two arms 7 extending between central region 6 and substrate 1, thereby suspending hotplate 6 over recess or opening 2.

As can be seen in Fig. 1, there are advantageously exactly two arms 7 for each bridge 3, with the arms extending collinear to each other and with central region 5 being arranged between them. It must be noted, though, that central region 5 can also be suspended by more than two arms, thereby more securely preventing a tilting of central region 5 in respect to substrate 1, at the expense of increased thermal conduction between central region 5 and substrate 1.

A patch 8 of sensing material is arranged on each hotplate 6. The sensing material is a material that changes at least one electrical property (in particular the real or imaginary part of its electrical impedance) as a function of the composition of the gas that surrounds it. The change of the property can be measured in order to obtain information on said composition.

The sensing material can e.g. contain at least one metal oxide material. Such metal oxide material generally may include one or more of tin oxide, zinc oxide, titanium oxide, tungsten oxide, indium oxide and gallium oxide. Such metal oxides may be used for the detection of analytes such as VOCs, carbon monoxide, nitrogen dioxide, methane, ammonia or hydrogen sulphide. Metal oxide sensors are based on the concept that gaseous analytes interact with the metal oxide layer at elevated temperatures of the sensitive layer in the range of more than 100 °C, and specifically between 250 °C and 350 °C. As a result of the catalytic reaction, the conductivity of the sensitive film may change, which change can be measured. Hence, such gas sensors are also denoted as high temperature chemoresistors for the reason that a chemical property of the analyte is converted into an electrical resistance at high temperatures of the sensitive film.

Structures of the type shown in Fig. 1 can e.g. be built using techniques such as described in EP 2278308 or US 2014/0208830.

In particular, the process for manufacturing comprises the steps of forming a plurality of dielectric and metal layers on top of substrate 1. Some of these layers may be deposited in the course of the process for forming the CMOS circuitry 4, e.g. as intermetal dielectric layer and metal layers, while other layers may be applied during post-processing, such as a tensile silicon nitride layer. Then, recess or opening 2 is formed using selective, anisotropic etching techniques. The patches 8 of sensing material can e.g. be applied using dispensing techniques where a drop or several drops of a liquid precursor of the sensing material is applied to the hotplates, such as e.g. described in EP 2952885.

As mentioned, the device advantageously comprises several bridges 3, each with its own patch 8 of sensing material. The different bridges can e.g. be operated at different temperatures or can have differing sensing materials, which allows to measure several parameters of the gaseous environment at once, thereby gaining a better understanding of its composition.

One aspect of the present invention is the design of the bridges 3. In the following, various embodiments of bridges are described, illustrating various advantageous aspects, which can be cross-combined or used individually. In particular, even if a feature is mentioned for only one of the embodiments below, it can be advantageously also used in the other embodiments or separately.

Another aspect of the invention relates to the geometry of the bridges. Geometries other than those shown in Fig. 1 (not covered by the claims) are subsequently shown in sections "device geometry 2" and "device geometry 3" below. Again, any of these device geometries can be combined, in particular also with any of the bridge embodiments shown herein.

### Embodiment 1:

A first embodiment of the bridge is illustrated in Figs. 2 - 5. These figures show central region 5 as well as the central ends of the arms 7 of the bridge.

As can best be seen from Figs. 2 and 3, central region 5 has a circular circumference 10 as defined above. Its diameter D is larger than the minimum width d of each arm 7. For example, the diameter D of central region 5 can be between 20 and 50 µm, while the minimum width d of each arm can be between 10 and 20 µm.

Bridge 3 is formed by a plurality of dielectric layers and metal layers. The metal layers will be described in more detail below. The dielectric layers can, in particular, comprise layers of silicon oxide and/or silicon nitride.

In one embodiment, as shown in Fig. 3, bridge 3 can comprise at least one bottommost dielectric layer 11, a first metal layer 12, a second dielectric layer 13, a second metal layer 14, and a top dielectric layer 15. (The reference numbers indicating the approximate levels of the various layers are shown at the left of Fig. 3.)

As discussed in more detail below, bottommost dielectric layer 11 can also be omitted, or only be present over part of first metal layer 12, thereby exposing at least part of first metal layer 12 at the bottom of hotplate 6.

In the shown embodiment, patch 8 of sensing material covers substantially all of central region 5, i.e. all of hotplate 6.

In one advantageous embodiment, patch 8 is only applied to one side of hotplate 6, namely to its top side, but not to its bottom side. Alternatively, and as mentioned below, patch 8 can also extend over at least part of the bottom side of hotplate 6.

The thickness of patch 8 is comparatively thin. Advantageously it is less than 10 µm, in particular less than 5 µm, and it is typically at least 1 µm.

### First metal layer:

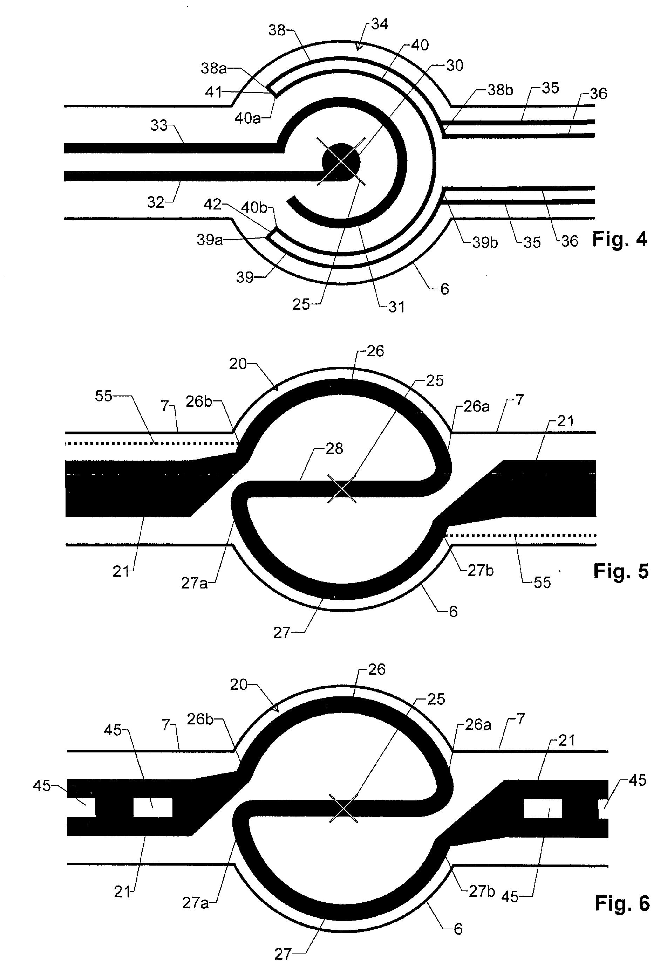

First metal layer 12 is, in the shown embodiments, the bottommost metal layer in bridge 3. It is advantageously a tungsten or platinum or gold layer. The structures formed by first metal layer 12 are shown in dotted lines in Fig. 2 and as black regions in Fig. 5.

First metal layer 12 forms a heater 20 and heater leads 21.

The purpose of heater 20 is to heat the hotplate to a temperature suitable for measuring one or more analyte(s). Typical temperatures are given above. It may also be used for thermally resetting the gas sensor by heating the sensing material to a temperature above its normal operating temperature, thereby releasing any adsorbed or bonded contaminants.

The purpose of the heater leads 21 is to feed provide current to heater 20. They extend through separate arms 7.

The width of the heater leads 21 is larger than the width of the leads forming heater 20 in order to concentrate the heat generation to hotplate 6. For example, the heater leads 21 may have a width of 5 - 10 µm, while the lead of heater 20 itself has a width between 1 - 5 µm.

Heater 20 is formed by a single lead extending between the inner ends of the heater leads 21.

Advantageously, heater 20 has two-fold symmetry under rotation about a center point 25 of hotplate 6 (which is denoted by a 45° cross in the drawings). It consists of a first section 26 extending along a circle around center point 25, a second section 27 extending along the same circle, and a radial section 28, the latter connecting a first end 26a of first section 26 with a first end 27a of second section 27. The second end 26b of first section 26 is connected to a first one of the heater leads 21, while the second end 27b of second section 27 is connected to the second one of the heater leads 21.

Advantageously, each of said first and second sections 26, 27 extends over an azimuthal angle of at least 120° around center point 25.

### Second metal layer:

Second metal layer 14 is, in the shown embodiments, the topmost metal layer in bridge 3. It is advantageously a platinum or gold layer. The structures formed by second metal layer 14 are shown in dashed lines in Fig. 2 and as black regions in Fig. 4.

In most of the embodiments shown, second metal layer 14 forms a pair of electrodes 30, 31, electrode leads 32, 33, a temperature sensor 34 and temperature sensor leads 35, 36.

The purpose of the electrodes 30, 31 is to electrically contact patch 8 of sensing material in order to measure its resistance. They are exposed to patch 6 by suitably placed windows 36 in topmost dielectric layer 15.

The electrodes 30, 31 are coaxial to central point 25 of hotplate 6. In the embodiment shown, one electrode is a circular center electrode 30. The other electrode forms an outer electrode 31 and extends along an angle of at least 240°, in particular along an azimuthal angle of at least 270°, around center electrode 30. Advantageously, outer electrode 31 extends along a circle coaxial to center point 25.

The electrode leads 32, 33 connect the electrodes 30, 31 to processing circuitry and extend through a first one of the arms 7.

The purpose of temperature sensor 34 is to measure the temperature on hotplate 6. Its signal can be used e.g. for improved processing of the data measured by the electrodes 30, 31 and/or for controlling the temperature of hotplate 6.

In an advantageous embodiment, temperature sensor 34 comprises a first section 38 and a second section 39 extending along a common outer circle, with each of said first and second sections advantageously extending over an azimuthal angle at least 90°. It further comprises a third section 40 extending along an inner circle, coaxial and at a distance to the outer circle. Advantageously, third section 40 extends over an azimuthal angle of at least 180°. Both, the inner and the outer circles, are advantageously coaxial to center point 25 of hotplate 6. One end 38a of first section 38 and one end 39a of second section 39 are connected to opposite ends 40a, 40b of third section 40 by means of connecting leads 41, 42, which connecting leads 40, 41 are advantageously formed by straight or curved sections much shorter than, advantageously at least ten times shorter than, any of the first, second and third sections 38 - 40. The second ends 38b, 39b of the first and second sections 38, 39 are connected to the temperature sensor leads 35, 36.

The temperature sensor leads 35, 36 connect temperature sensor 34 to processing circuitry. They advantageously extend through a second one of the arms 7, i.e. not through the same arm as the electrode leads 32, 33.

In the embodiment shown, two temperature separate sensor leads 35, 36 are advantageously connected to second end 38b of first section 38, and two separate temperature sensor leads 35, 36 are connected to second end 39b of second section 39, which allows to carry out a four point measurement with one pair 36 of the temperature sensor leads carrying a current and the other pair 35 being used for measuring the voltage drop over temperature sensor 34, thereby eliminating any voltage drop over the current carrying leads.

### Embodiment 2

Fig. 6 shows a second embodiment of bridge 3, which differs from the first embodiment only in its design of first metal layer 12. Hence, Fig. 6 only shows the structure of this first metal layer.

As can be seen, in this embodiment, the heater leads 21, which extend in bridge 3 between heater 20 and substrate 1, comprise a plurality of openings 45. These openings are filled by dielectric material from the neighbouring dielectric layers 11, 13. This design improves the inter-layer-adhesion between the dielectric layers and reduces the tendency of the layers to peel off (delaminate) from each other at their interface with first metal layer 12.

### Embodiment 3

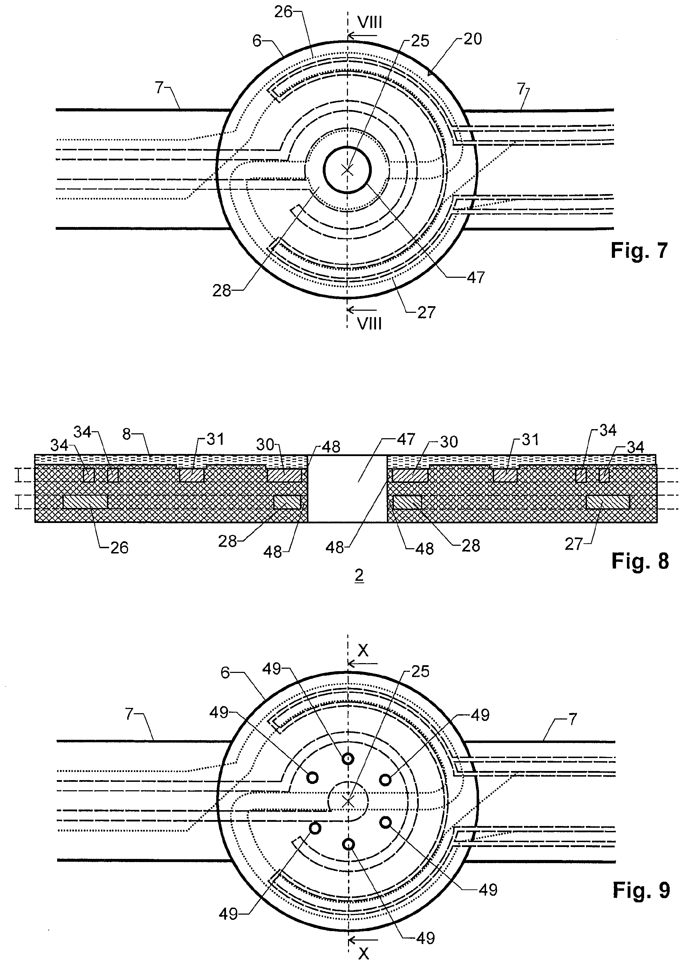

Figs. 7 and 8 show a third embodiment of bridge 3. It differs from the first embodiment by having an opening 47 extending through all dielectric and metal layers of hotplate 6.

In this embodiment, opening 47 is located at central point 25. Hence, opening 47 extends through circular center electrode 30, for which reason this electrode has a somewhat larger diameter than the electrode of the first embodiment.

Also, opening 47 extends through radial section 28 of heater 20, for which reason radial section 28 is led around both sides of opening 47, as illustrated in dotted lines in Fig. 7.

Opening 47 increases the adhesion of patch 8, thereby reducing the risk of delamination.

Further, opening 47 reduces mechanical stress in bridge 3, in particular in central region 5.

It must be noted that, even though not shown in Fig. 8, patch 8 may extend into opening 47 and even to the bottom side of hotplate 6 (see below for further such examples)

Advantageously, the structures of one or more of the metal layers 12, 14, in particular of the first metal layer 12, are insulated from opening 47 by means of sections 48 of dielectric material, thereby protecting the metal layers, in particular the first metal layer, from the surrounding atmosphere, improving the bonding between the dielectric layers, and preventing short circuits between the metal layers.

### Embodiment 4

Figs. 8 and 9 show a fourth embodiment of bridge 3. It differs from embodiment 3 in the number and location of the openings in hotplate 6.

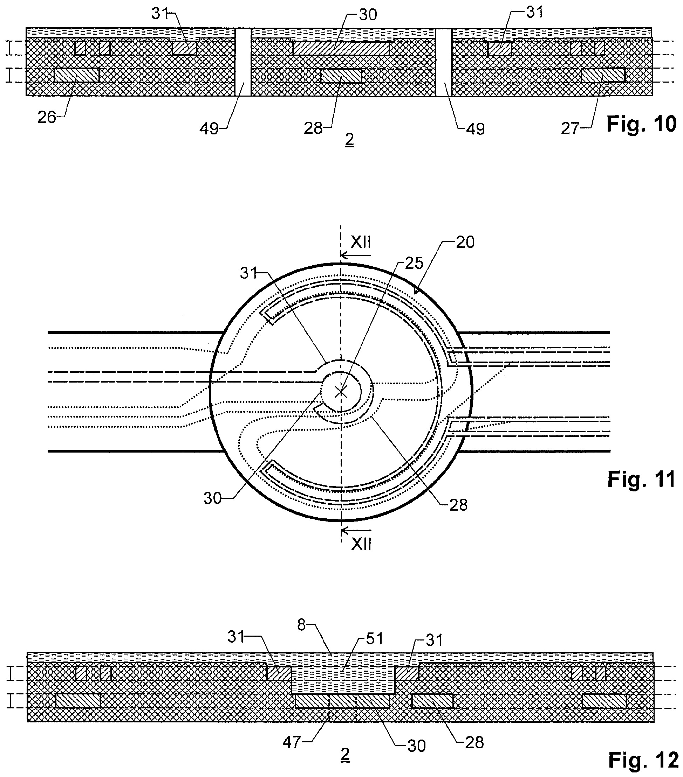

In the embodiment of Figs. 9 and 10, there are several such openings 49, and they extend off-center (i.e. at a distance from center point 24) through hotplate 6.

Again, the openings improve the cohesion of the various layers of bridge 3, in particular the adhesion of patch 8, and they reduce mechanical stress in bridge 3, in particular in central region 5.

Similarly as in the previous embodiments, the structures of one or more of the metal layers 12, 14 are insulated from opening 47 by means of sections 48 dielectric material.

It must be noted that the openings shown in the third and fourth embodiments can also be used in combination and/or that further openings can be provided elsewhere on hotplate 6.

In any case, this type of opening 47, 49 advantageously extends all the way through hotplate 6, with the possible exception of patch 8, which may or may not span the openings 47, 49 and/or extend into or through the openings 47, 49.

### Embodiment 5

The fifth embodiment as shown in Figs. 11 and 12 differs from the previous embodiments in that a first one of the electrodes (electrode 30 in this embodiment) is located below a second one of the electrodes (electrode 31 in this embodiment).

In particular, in this embodiment, first electrode 30 is formed by first metal layer 12 (shown in dotted lines in Fig. 11), while a second electrode 31 is formed by second metal layer 14.

In this case, first metal layer 12 is advantageously a platinum or gold layer, same as second metal layer 14, in order to form electrodes that are highly resistant to corrosion.

In order to provide a contact between first electrode 30 and patch 8 of sensing material, first electrode 30 is arranged at the bottom of a well 51 that extends up through any dielectric and metal layers arranged above first electrode 30, thereby forming a recess in the dielectric and metal layers of the hotplate 6. Patch 8 of sensing material extends into this well 51 in order to contact first electrode 30 arranged at its bottom.

Advantageously, second electrode 31 is arranged adjacent to the top end of well 51.

Since first electrode 30 is arranged in first metal layer 12, heater 20 must be led around it. In the embodiment of Fig. 11 this is achieved by laterally displacing radial section 28 of heater 20.

The fifth embodiment allows to measure across a defined height of sensing material. This height can be adapted by varying the thickness of the dielectric and metal layer(s) between them.

As shown with dotted lines, the fifth embodiment can also be provided with a through-hole 47, as the third embodiment, in order to improve the adhesion of the sensing material to the rest of the bridge and/or in order to reduce stress.

Advantageously, the first and second metal layers 12, 14 of the fifth embodiment are platinum or gold layers in order to render both electrodes 30, 31 corrosion-resistant.

### Embodiment 6

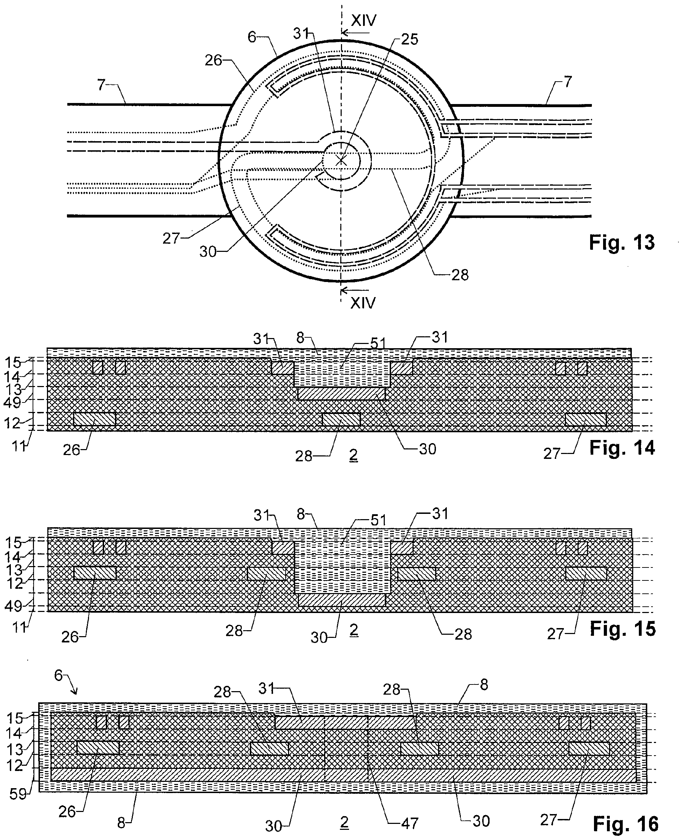

The sixth embodiment as shown in Figs. 13 and 14 is similar to the fifth embodiment in that one of the electrodes is arranged in a layer below the other electrode.

In the shown embodiment, first electrode 30 is arranged at the bottom of a well 51 that extends all the way to the top of the dielectric and metal layers of hotplate 6. Patch 8 again extends into well 51 for contacting first electrode 30, while second electrode 31 is advantageously located adjacent to the top end of well 51.

In contrast to the fifth embodiment, first electrode 30 of the sixth embodiment is formed by a third metal layer 59, separate from the first and second metal layers 12, 14.

Third metal layer 59 is advantageously a platinum or gold layer, same as second metal layer 14. In the sixth embodiment, third metal layer 59 is arranged between first metal layer 12 and second metal layer 14.

First metal layer 12 is advantageously a tungsten layer.

By arranging first electrode 30 in a metal layer separate from first metal layer 12, heater 20 can again have two-fold rotational symmetry in respect to center point 25, just as in the first embodiment, e.g. with its radial section 28 extending right through center point 25 of hotplate 6.

### Embodiment 7

The seventh embodiment as shown in Fig. 15 differs from the sixth embodiment in that third metal layer 59 is arranged below first metal layer 12 and below second metal layer 14.

Hence, and as can be seen in Fig. 15, first electrode 30 is now arranged closer to the bottom of hotplate 6, and well 51 extends further into hotplate 6.

Heater 20 still has two-fold rotational symmetry in respect to center point 25, but its radial section 28 is split at its center to be guided around well 51, in a geometry similar to the one shown in Fig. 7.

### Embodiment 8

The eighth embodiment shown in Fig. 16 differs from the embodiment of Fig. 15 in that first electrode 30 is exposed (i.e. not covered by a dielectric layer) on the bottom side of the bridge. Further, patch 8 of sensing material extends from the top side to the bottom side of hotplate 6, thus contacting first electrode 30 from below and second electrode 31 from above.

In order to form a patch 8 that extends to the bottom side of hotplate 6, a sufficient amount of liquid precursor of the sensing material can be added to the top side of hotplate 6 in the manufacturing process, such that the material overflows the edges of hotplate 6 and extends to the bottom side.

Alternatively, or in addition thereto, one or more openings extending through all the dielectric and metal layers of hotplate 6, as illustrated by dotted lines 47 in Fig. 16, can e.g. be formed by dry-etching. This at least one opening allows the liquid precursor of the sensing material to flow from the top to the bottom side of hotplate 6.

In the embodiment of Fig. 16, first electrode 30 is an unstructured metal layer covering all of the bottom of bridge 3. Hence, first electrode 30 can be used as an etch stop when etching recess or opening 2.

However, alternatively, first electrode 30 can be structured, i.e. it does not necessarily have to cover all of the bottom side of bridge 3, which is advantageous in order to reduce the thermal conductance in the arms 7 of the bridge. In that case, a separate etch stop must be used in the manufacturing process.

It must be noted that the embodiment of Fig. 16 with an exposed metal layer for forming an electrode at the bottom of hotplate 6 does not require three metal layers. It may also be manufactured using two metal layers only, in which case the first (bottommost) metal layer forms the first electrode 30 and is exposed at least at some places for contacting the patch 8. In this case, heater 20 can be integrated in either the first or the second metal layer.

### Embodiment 9

The ninth embodiment teaches a feature that can be combined with any of the previous embodiments, in fact with any embodiments where the bridge comprises a central region held by two or more arms.

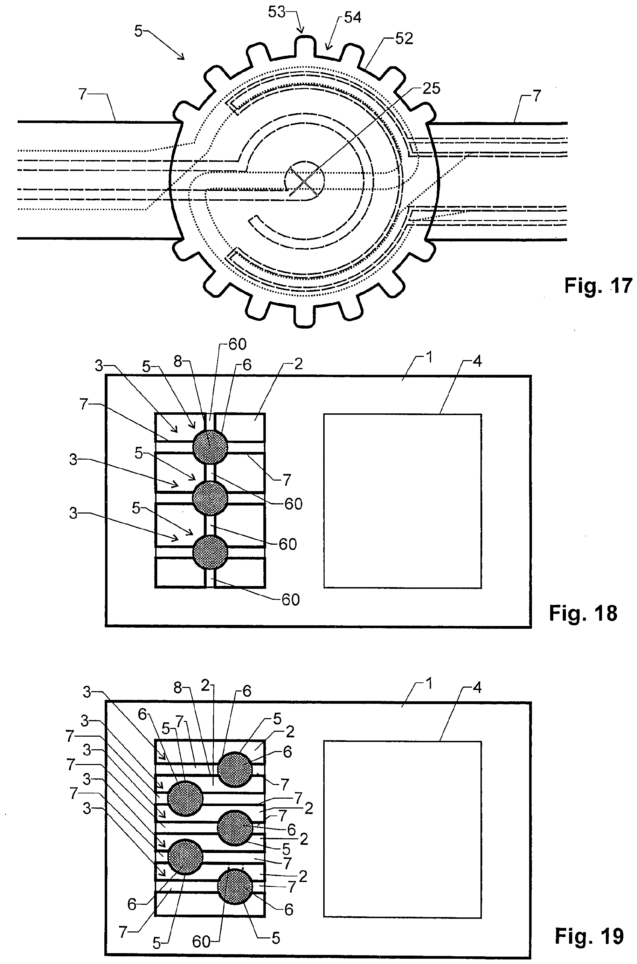

The shown embodiment of Fig. 17 differs from the previous embodiments in that the edge 52 of central region forms a plurality of recesses and/or projections, in the sense as defined above.

Advantageously, the projections and recesses of edge 52 are formed by all dielectric layers of bridge 3 (i.e. all dielectric layers extend all the way to edge 52) for maximum mechanical strength.

The projections and recesses advantageously form a series of fingers 53 separated by bays 54, in particular at least four, advantageously at least six, such fingers.

In one advantageous embodiment, the azimuthal width of the bays is between 1 to 3 µm, and their radial length between 2 and 4 µm, in particular 3 µm.

Edge 52 with its recesses and/or projections increases the total length of the edge or circumference of hotplate 6. As mentioned above, this design allows to better confine the liquid precursor of the sensing material to the central region and prevent it from flowing over the edge (pinning).

On the other hand, if a sufficient amount of the liquid precursor is added, it will start to flow into the bays 54, a flow encouraged by capillary forces, thereby anchoring patch 8 and counteracting delamination effects.

### Device geometry 2:

In the embodiment of Fig. 1, each bridge 3 consists of a central region 5 and two arms 7 arranged at opposite sides thereof. The central regions 5 are not otherwise stabilized and therefore can exhibit a tendency to tilt about the longitudinal axis of the arms 7.

Fig. 18 shows a second device geometry where each central region 5 is connected to two bars 60, with each bar either extending between two bridges 3 or between a bridge 3 and substrate 1. These bars stabilize the central regions 5 against tilting.

In more general terms, at least one of the (potentially several) central region(s) 5 of the device can be connected to at least one bar 60, in particular at least two bars 60, in addition to being connected to the arms 7, wherein said bar extends between said central region 5 and a neighbouring bridge or between said central region 5 and said substrate 1.

The bar or bars 60 can be formed by the same layers 11 - 15 as the bridges 7. In particular, the bar or bars consist advantageously of at least one dielectric layer 11, 13, 15 and, optionally, at least one of the metal layers 12, 14, 59 mentioned above.

Advantageously, the bars 60 and arms 7 are equidistantially distributed along the circumference of the central region 5, i.e. the angles between neighbouring arms and/or bars are all the same. In the embodiment of Fig. 18, where there are e.g. totally four bars 60 and arms 7 attached to each central region 5, the angles between them are 90°. However, there may e.g. also be four bars 60 and two arms 7 attached to each central region 5, in which case the angles between neighbouring bars and/or arms would be 60°.

Advantageously, in order to reduce thermal conductance, the minimum width of each bar, or at least some of the bars, is smaller than the diameter D of central region 5.

Advantageously, the bars 60 consist of dielectric layers only. However, at least one of the metal layers mentioned above may extend through at least one of the bars 60, in which case it can advantagously form at least one of the leads described above, in particular any of the leads 21, 32, 33, 35, and/or 36.

### Device geometry 3:

In the embodiment of Fig. 1, each hotplate 6 and the corresponding central region 5 are arranged in the center of their bridge 3, i.e. the arms 7 connected to each central region 5 are of equal length. This embodiment with arms 7 of equal length is not covered by the claims.

According to embodiments of the invention however, the arms 7 connected to central region 5 of at least one of the bridges 3 are of unequal length, and, in particular, the lengths of the arms of a bridge 3 may differ by at least 10%, in particular by at least 30%. In that case, central region 5, as well as hotplate 6, are not arranged in the center of their bridge 3.

Such a design is particularly useful for increasing the density of the device.

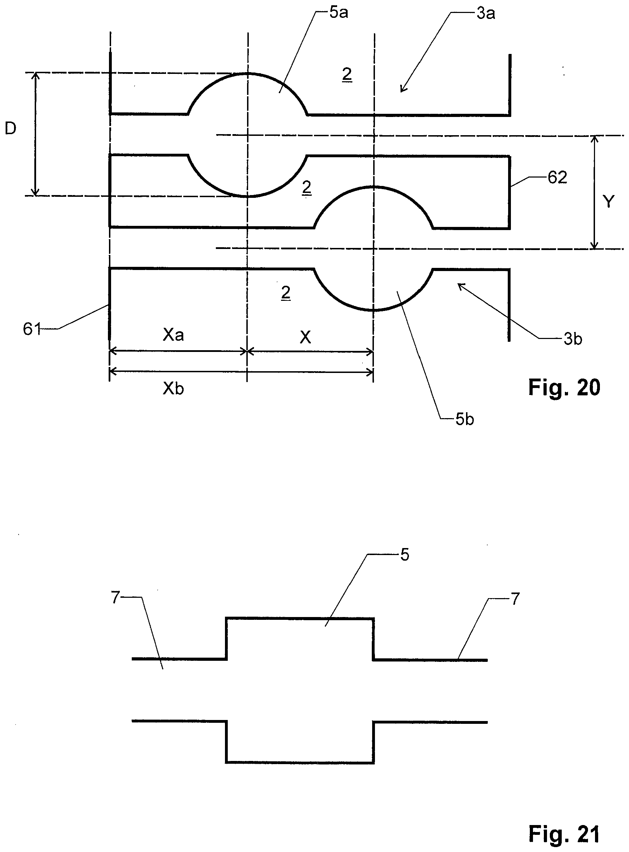

In particular, and as best seen in Fig. 20, a large density can be achieved if the device comprises at least two parallel, neighbouring bridges 3a, 3b where the central regions 5a, 5b of the neighbouring bridges 3a, 3b are, in a direction along the bridges 3 (i.e. in the longitudinal direction of the bridges) offset in respect to each other. In other words, if the neighbouring bridges 3a, 3b extend from a first side 61 to a second side 62 of opening or recess 2, the distance Xa, Xb of the middle point of their central regions 5a, 5b from first side 61 are different.

In particular, the central regions are offset in respect to each other by a distance X of at least half of their diameter D, i.e. by at least D/2, in particular by at least D. In other words, the difference X of the distances Xa, Xb of the center points of the central regions 5a, 5b from first side 61 is at least D/2, in particular at least D.

As seen in Fig. 20, this design even allows to arrange the central regions 5 such that, in a direction perpendicular to a longitudinal direction of the neighbouring bridges 3a, 3b, the distance Y of the centers of the central regions 5a, 5b of the at least two neighbouring bridges 3a, 3b is smaller than the diameter D of the central regions.

It must be noted that the bars 60 of device geometry 2 (e.g. of Fig. 18) and the distribution of the central regions 5 of device geometry 3 (e.g. of Fig. 19) can be combined. In that case, advantageously, each bar 60 can e.g. be connected to a bridge 7 or substrate 1 at its one end and a central region 5 at its other end, as illustrated in dotted lines for one such bar 60 in Fig. 19.

### Notes:

In the embodiments above, temperature sensor 34 is separate from heater 20. As mentioned, the temperature sensor can alternatively be formed by the heater, in particular if first metal layer 12 is a tungsten layer. In that case, advantageously, auxiliary sensing leads are embedded in first metal layer 12 in order to carry out a four point measurement. Such sensing leads are indicated in Fig. 5 by dotted lines 55.

Advantageously, bridge 3 contains no silicon layers in order to reduce thermal conductivity and thermal mass. In particular, bridge 3 consists only of dielectric layers, such as the layers 11, 13, 15, two or three metal layers, such as the layers 12, 14, 59, as well as the patch 8 of sensing material.

As shown above, patch 8 can be applied to only one or two both sides of hotplate 6. In the latter case, patch 8 advantageously extends over the lateral edge of or through an opening in hotplate 6, in which case one electrode can be mounted to the bottom side of hotplate 6.

In the above examples, central region 5 has circular circumference. However, central region 5 may also have non-circular circumference, such as rectangular or polygonal circumference. An example of a bridge with rectangular circumference is shown in Fig. 21.

As can be seen in the above embodiments, the longitudinal axis of the bridge or bridges 3 advantageously extends perpendicularly to the edges of recess or opening 2 that they are connected to since this reduces the footprint of the device.

The arms 7 are advantageously rectangular, i.e. they have constant width along their length.

In some of the above embodiments, central region 5 is only connected to the two arms 7, while in other embodiments the bars 60 also connect to central region 5. The embodiment where central region 5 only connects to two arms and not to any further bars is advantageous in the sense that it allows to better confine the sensing material to the central region only.

The hotplates of the different bridges of the device can be maintained at differing temperatures, e.g. between 200 and 500 °C. The temperature differences between neighbouring bridges may be substantial. Hence, it is particularly advantageous to implement the control electronics for maintaining the temperature in the hotplates in the CMOS circuitry 4 in order to achieve precise control of the temperatures

While there are shown and described presently preferred embodiments of the invention, it is to be distinctly understood that the invention is not limited thereto but may be otherwise variously embodied and practiced within the scope of the following claims.

## Claims

1. A gas sensor comprising
a substrate (1),
a recess or opening (2) arranged in said substrate (1),
a bridge (3) extending over said recess or opening (2) and being anchored in said substrate (1), wherein said bridge (3) comprises at least a first and a second metal layer (12, 14) separated by at least one dielectric layer (13), in particular of silicon nitride and/or silicon oxide, and wherein said bridge (3) forms a hotplate (6),
a patch (8) of sensing material, in particular of a metal oxide material, arranged on said hotplate (6),
a heater (20) located in said hotplate (6) and formed by said first metal layer (12),
electrodes (30, 31) located in said hotplate (6), formed at least in part by said second metal layer (14), and arranged for measuring an electrical property of said patch (8) of sensing material,
a temperature sensor (34) arranged in said hotplate (6), **characterized in that** said recess or opening (2) arranged in said substrate (1) comprises at least two parallel neighbouring bridges (3a, 3b), said bridges (3) comprise, in particular consist of, a central region (5) forming said hotplate (6) and two arms (7) of unequal length extending between said central region (5) and said substrate (1), wherein the central regions (5a, 5b) of the neighbouring bridges (3a, 3b) are, in a direction along the bridges (3) offset in respect to each other.

2. The gas sensor of claim 1 wherein said first metal layer (12) is a tungsten or platinum or gold layer and/or
wherein said second metal layer (14) is a platinum or gold layer.

3. The gas sensor of any of the preceding claims, wherein the lengths of the arms of said bridge differ by at least 10%, in particular by at least 30%.

4. The gas sensor of claim 1, wherein the central regions (5a, 5b) of the neighbouring bridges (3a, 3b) are, in a direction along the bridges (3) offset to each other by at least half of their diameter (D), in particular by at least their diameter (D).

5. The gas sensor of any of the preceding claims, wherein a diameter (D) of said central region (5) is larger than a minimum width (d) of each of said arms (7).

6. The gas sensor of any of the preceding claims, wherein said central region (5) has a circular circumference.

7. The gas sensor of any of the preceding claims, wherein said central region (5) has an edge (52) forming a plurality of recesses (54) and/or projections (53), and in particular wherein said edge (52) is formed by all dielectric layers of said bridge (3).

8. The gas sensor of any of the preceding claims, comprising
at least two electrode leads (32, 33) extending between said electrodes (30, 31) and said substrate (1), wherein said electrode leads (32, 33) extend through a first one of said arms (7), and
at least two temperature sensor leads (35, 36) extending between said temperature sensor (34) and said substrate (1), wherein said temperature sensor leads (35, 36) extend through a second one of said arms (7).

9. The gas sensor of any of the preceding claims wherein said electrodes (30, 31) are coaxial, and in particular wherein said electrodes (30, 31) comprise a circular center electrode (30) and an outer electrode (31), wherein said outer electrode extends along an angle of at least 240°, in particular along an angle of at least 270°, around said center electrode (30).

10. The gas sensor of any of the preceding claims wherein said heater (20) has two-fold rotational symmetry about a center point (25) and consists of a first section (26) extending along a circle around said center point (25), a second section (27) extending along said circle, and a radial section (28) connecting a first end (26a) of said first section (26) with a first end (27a) of said second section (27), wherein a second end (26b) of said first section (26) and a second end (27b) of said second section (27) are connected to heater leads (21) for supplying a current to said heater (20).

11. The gas sensor of any of the preceding claims wherein said temperature sensor (34) and at least one of said electrodes (30, 31), in particular both of said electrodes (30, 31), are formed by the second metal layer (14).

12. The gas sensor of any of the preceding claims wherein a first one (30) of said electrodes is arranged at a layer below a second one (31) of said electrodes.

13. The gas sensor of claim 12 wherein said first electrode (30) is formed by the first metal layer (12) and said second electrode (31) is formed by the second metal layer (14), and in particular wherein said first and metal layers (12, 14) are platinum or gold layers.

14. The gas sensor of claim 13 wherein said first electrode (30) is formed by a third metal layer (59) separate from said first and second metal layers (12, 14), an in particular wherein
said third metal layer (59) is arranged between said first and said second metal layers (12, 14) or
said third metal layer (59) is arranged below said first and said second metal layers (12, 14).

15. The gas sensor of any of the claims 12 to 14 wherein said first electrode (30) is arranged at a bottom of a well (51) extending up through the metal and dielectric layers above said first electrode (30), and wherein said patch (8) of sensing material extends into said well (51) for contacting said first electrode (30), and in particular wherein said second electrode (31) is arranged adjacent to a top end of said well (51).

16. The gas sensor of any of the preceding claims, wherein said temperature sensor (34) is separate from said heater (20).

17. The gas sensor of any of the claims 1 to 15, wherein said temperature sensor is formed by said heater (20), and in particular wherein said heater (20) is of tungsten.

18. The gas sensor of any of the preceding claims comprising at least one opening (47, 49) extending through said hotplate (6), and in particular wherein said gas sensor comprises
an opening (47) extending through a center point (25) of said hotplate (6) and/or
several openings (49) extending off-center through said hotplate (6).

19. The gas sensor of any of the preceding claims comprising heater leads (21) extending in said bridge (3) between said heater (20) and said substrate (1), wherein said header leads (21) comprise a plurality of openings (45) filled by dielectric material.

20. The gas sensor of any of the preceding claims further comprising CMOS processing circuitry integrated on said substrate (1).

21. The gas sensor of any of the preceding claims wherein said bridge (3) does not contain any silicon layer, and in particular wherein said bridge (3) consists of dielectric layers (11, 13, 15), two or three metal layers (12, 14) as well as said Patch (8) of sensing material.

22. The gas sensor of any of claims 1 to 8, wherein said central region (5) is connected to at least one bar (60), in particular at least two bars (60) in addition to being connected to the arms (7) of the bridge (3), wherein said bar (60) extends between said central region (5) and a neighbouring bridge or between said central region (5) and said substrate (1), and in particular wherein said bar or bars (60) consist of at least one dielectric layer (11, 13, 15) and, optionally, the at least one of said metal layers (12, 14, 59).

23. The gas sensor of any of the claims 1 to 8 or 22 comprising several bridges (3).

## Patentansprüche

1. Ein Gassensor, umfassend
ein Substrat (1),
eine Aussparung oder Öffnung (2), die in dem Substrat (1) angeordnet ist,
eine Brücke (3), die sich über die Aussparung oder Öffnung (2) erstreckt und im Substrat (1) verankert ist, wobei die Brücke (3) mindestens eine erste und eine zweite Metallschicht (12, 14) umfasst, die durch mindestens eine dielektrische Schicht (13), insbesondere aus Siliziumnitrid und/oder Siliziumoxid, getrennt sind, und wobei die Brücke (3) eine Heizplatte (6) bildet,
einen Patch (8) aus Sensormaterial, insbesondere aus einem Metalloxid-Material, der auf der Heizplatte (6) angeordnet ist,
eine Heizvorrichtung (20), die in der Heizplatte (6) angeordnet ist und durch die erste Metallschicht (12) gebildet ist,
Elektroden (30, 31), die sich in der Heizplatte (6) befinden und zumindest teilweise durch die zweite Metallschicht (14) gebildet sind und zum Messen einer elektrischen Eigenschaft des Patch (8) aus Sensormaterial angeordnet sind,
einen Temperatursensor (34), der in der Heizplatte (6) angeordnet ist, **dadurch gekennzeichnet, dass** die im Substrat (1) angeordnete Aussparung oder Öffnung (2) mindestens zwei parallele, benachbarte Brücken (3a, 3b) umfasst, wobei die Brücken (3) insbesondere aus einem zentralen Bereich (5), der die Heizplatte (6) bildet, und zwei Armen (7) ungleicher Länge, die sich zwischen dem zentralen Bereich (5) und dem Substrat (1) erstrecken, bestehen oder diese umfasst, wobei die zentralen Bereiche (5a, 5b) der benachbarten Brücken (3a, 3b) in einer Richtung entlang der Brücken (3) zueinander versetzt sind.

2. Der Gassensor nach Anspruch 1, wobei die erste Metallschicht (12) eine Wolfram- oder Platin- oder Goldschicht ist und/oder
wobei die zweite Metallschicht (14) eine Platin- oder Goldschicht ist.

3. Der Gassensor nach einem der vorangehenden Ansprüche, wobei sich die Längen der Arme der Brücke um mindestens 10%, insbesondere um mindestens 30%, unterscheiden.

4. Der Gassensor nach Anspruch 1, wobei die zentralen Bereiche (5a, 5b) der benachbarten Brücken (3a, 3b) in einer Richtung entlang der Brücken (3) um mindestens die Hälfte ihres Durchmessers (D), insbesondere um mindestens ihren Durchmesser (D), gegeneinander versetzt sind.

5. Der Gassensor nach einem der vorangehenden Ansprüche, wobei ein Durchmesser (D) des Zentralbereichs (5) größer ist als eine Mindestbreite (d) jedes der Arme (7) .

6. Der Gassensor nach einem der vorangehenden Ansprüche, wobei der zentrale Bereich (5) einen kreisförmigen Umfang hat.

7. Der Gassensor nach einem der vorangehenden Ansprüche, wobei der zentrale Bereich (5) einen Rand (52) aufweist, der eine Vielzahl von Aussparungen (54) und/oder Vorsprüngen (53) bildet, und wobei der Rand (52) insbesondere durch alle dielektrischen Schichten der Brücke (3) gebildet ist.

8. Der Gassensor nach einem der vorangehenden Ansprüche, umfassend
mindestens zwei Elektrodenleitungen (32, 33), die sich zwischen den Elektroden (30, 31) und dem Substrat (1) erstrecken, wobei sich die Elektrodenleitungen (32, 33) durch einen ersten der Arme (7) erstrecken, und
mindestens zwei Temperatursensorleitungen (35, 36), die sich zwischen dem Temperatursensor (34) und dem Substrat (1) erstrecken, wobei sich die Temperatursensorleitungen (35, 36) durch einen zweiten der Arme (7) erstrecken.

9. Der Gassensor nach einem der vorangehenden Ansprüche, wobei die Elektroden (30, 31) koaxial sind und insbesondere die Elektroden (30, 31) eine kreisförmige Mittelelektrode (30) und eine Aussenelektrode (31) umfassen, wobei sich die Aussenelektrode in einem Winkel von mindestens 240°, insbesondere in einem Winkel von mindestens 270°, um die Mittelelektrode (30) herum erstreckt.

10. Der Gassensor nach einem der vorangehenden Ansprüche, wobei die Heizvorrichtung (20) eine zweifache Rotationssymmetrie um einen Mittelpunkt (25) aufweist und aus einem ersten Abschnitt (26), der sich entlang eines Kreises um den Mittelpunkt (25) erstreckt, und einem zweiten Abschnitt (27), der sich entlang des Kreises erstreckt, besteht, und einen radialen Abschnitt (28), der ein erstes Ende (26a) des ersten Abschnitts (26) mit einem ersten Ende (27a) des zweiten Abschnitts (27) verbindet, wobei ein zweites Ende (26b) des ersten Abschnitts (26) und ein zweites Ende (27b) des zweiten Abschnitts (27) mit Heizleitungen (21) zum Zuführen eines Stroms zur Heizvorrichtung (20) verbunden sind.

11. Der Gassensor nach einem der vorangehenden Ansprüche, wobei der Temperatursensor (34) und mindestens eine der Elektroden (30, 31), insbesondere beide Elektroden (30, 31), durch die zweite Metallschicht (14) gebildet werden.

12. Der Gassensor nach einem der vorangehenden Ansprüche, wobei eine erste (30) der Elektroden in einer Schicht unterhalb einer zweiten (31) der Elektroden angeordnet ist.

13. Der Gassensor nach Anspruch 12, wobei die erste Elektrode (30) durch die erste Metallschicht (12) und die zweite Elektrode (31) durch die zweite Metallschicht (14) gebildet ist, und wobei insbesondere die erste und die Metallschicht (12, 14) Platin- oder Goldschichten sind.

14. Der Gassensor nach Anspruch 13, wobei die erste Elektrode (30) durch eine dritte Metallschicht (59) gebildet ist, die von der ersten und der zweiten Metallschicht (12, 14) getrennt ist, wobei insbesondere
die dritte Metallschicht (59) zwischen der ersten und der zweiten Metallschicht (12, 14) angeordnet ist oder
die dritte Metallschicht (59) unter der ersten und der zweiten Metallschicht (12, 14) angeordnet ist.

15. Der Gassensor nach einem der Ansprüche 12 bis 14, wobei die erste Elektrode (30) am Boden eines Schachtes (51) angeordnet ist, der sich durch die Metall- und dielektrischen Schichten über der ersten Elektrode (30) nach oben erstreckt, und wobei sich das Patch (8) aus Sensormaterial in den Schacht (51) erstreckt, um die erste Elektrode (30) zu kontaktieren, und wobei insbesondere die zweite Elektrode (31) neben einem oberen Ende des Schachtes (51) angeordnet ist.

16. Der Gassensor nach einem der vorangehenden Ansprüche, wobei der Temperatursensor (34) von der Heizvorrichtung (20) getrennt ist.

17. Der Gassensor nach einem der Ansprüche 1 bis 15, wobei der Temperatursensor durch die Heizvorrichtung (20) gebildet ist und insbesondere die Heizvorrichtung (20) aus Wolfram besteht.

18. Der Gassensor nach einem der vorangehenden Ansprüche, der mindestens eine Öffnung (47, 49) aufweist, die sich durch die Heizplatte (6) erstreckt, und insbesondere wobei der Gassensor
eine Öffnung (47), die sich durch einen Mittelpunkt (25) der Heizplatte (6) erstreckt, und/oder
mehrere Öffnungen (49), die sich außermittig durch die Heizplatte (6) erstrecken, umfasst.

19. Der Gassensor nach einem der vorangehenden Ansprüche, umfassend Heizleitungen (21), die sich in der Brücke (3) zwischen der Heizung (20) und dem Substrat (1) erstrecken, wobei die Heizleitungen (21) eine Vielzahl von Öffnungen (45) aufweisen, die mit dielektrischem Material gefüllt sind.

20. Der Gassensor nach einem der vorangehenden Ansprüche, weiter umfassend eine auf dem Substrat (1) integrierte CMOS-Verarbeitungsschaltung.

21. Der Gassensor nach einem der vorangehenden Ansprüche, wobei die Brücke (3) keine Siliziumschicht enthält und insbesondere wobei die Brücke (3) aus dielektrischen Schichten (11, 13, 15), zwei oder drei Metallschichten (12, 14) sowie dem Patch (8) aus Sensormaterial besteht.

22. Der Gassensor nach einem der Ansprüche 1 bis 89, wobei der zentrale Bereich (5) mit mindestens einem Stab (60), insbesondere mindestens zwei Stäben (60), verbunden ist und zusätzlich mit den Armen (7) der Brücke (3) verbunden ist, wobei sich der Stab (60) zwischen dem zentralen Bereich (5) und einer benachbarten Brücke oder zwischen dem zentralen Bereich (5) und dem Substrat (1) erstreckt, und insbesondere wobei der Stab oder die Stäbe (60) aus mindestens einer dielektrischen Schicht (11, 13, 15) und gegebenenfalls der mindestens einen der Metallschichten (12, 14, 59) bestehen.

23. Der Gassensor nach einem der Ansprüche 1 bis 8 oder 22, umfassend mehrere Brücken (3).

## Revendications

1. Un capteur de gaz comprenant
un substrat (1),
une cavité ou une ouverture (2) disposée dans ledit substrat (1),
un pont (3) s'étendant au-dessus de ladite cavité ou ouverture (2) et étant anchorisé dans ledit substrat (1), dans lequel ledit pont (3) comprend au moins une première et une deuxième couche métallique (12, 14) séparées par au moins une couche diélectrique (13), en particulier en nitrure de silicium et/ou en oxyde de silicium, et dans lequel ledit pont (3) forme une plaque chaude (6),
un patch (8) de matériau de détection, en particulier d'un matériau d'oxyde métallique, disposée sur ladite plaque chaude (6),
un chauffage (20) situé dans ladite plaque chaude (6) et formé par ladite première couche métallique (12),
des électrodes (30, 31) situées dans ladite plaque chaude (6), formées au moins en partie par ladite deuxième couche métallique (14), et disposées pour mesurer une propriété électrique dudit patch (8) de matériau de détection,
un capteur de température (34) disposé dans ladite plaque chaude (6), **caractérisé en ce que** ladite cavité ou ouverture (2) disposée dans ledit substrat (1) comprend au moins deux ponts voisins parallèles (3a, 3b), lesdits ponts (3) comprenant une, en particulier consistant d'une, région centrale (5) formant ladite plaque chaude (6) et deux bras (7) de longueur inégale s'étendant entre ladite région centrale (5) et ledit substrat (1), dans lequel les régions centrales (5a, 5b) des ponts voisins (3a, 3b) sont, dans une direction le long des ponts (3), décalées l'une par rapport à l'autre.

2. Le capteur de gaz selon la revendication 1, dans lequel ladite première couche métallique (12) est une couche de tungstène ou de platine ou d'or et/ou
Dans lequel ladite deuxième couche de métal (14) est une couche de platine ou d'or.

3. Le capteur de gaz selon l'une des revendications précédentes, dans lequel les longueurs des bras dudit pont diffèrent d'au moins 10%, en particulier d'au moins 30%.

4. Le capteur de gaz selon la revendication 1, dans lequel les régions centrales (5a, 5b) des ponts voisins (3a, 3b) sont, dans une direction le long des ponts (3), décalées les unes par rapport aux autres d'au moins la moitié de leur diamètre (D), en particulier d'au moins leur diamètre (D).

5. Le capteur de gaz selon l'une quelconque des revendications précédentes, dans lequel un diamètre (D) de ladite région centrale (5) est supérieur par rapport à une largeur minimale (d) de chacun desdits bras (7) .

6. Le capteur de gaz selon l'une quelconque des revendications précédentes, dans lequel ladite région centrale (5) a une circonférence circulaire.

7. Le capteur de gaz selon l'une quelconque des revendications précédentes, dans lequel ladite région centrale (5) présente un bord (52) formant une pluralité de cavités (54) et/ou de saillies (53), et en particulier dans lequel ledit bord (52) est formé par toutes les couches diélectriques dudit pont (3).

8. Le capteur de gaz selon l'une quelconque des revendications précédentes, comprenant
au moins deux fils d'électrode (32, 33) s'étendant entre lesdites électrodes (30, 31) et ledit substrat (1), dans lequel lesdits fils d'électrode (32, 33) s'étendent à travers un premier desdits bras (7), et au moins deux fils de capteur de température (35, 36) s'étendant entre ledit capteur de température (34) et ledit substrat (1), dans lequel lesdits fils de capteur de température (35, 36) s'étendent à travers un deuxième desdits bras (7).

9. Le capteur de gaz selon l'une quelconque des revendications précédentes, dans lequel lesdites électrodes (30, 31) sont coaxiales, et en particulier dans lequel lesdites électrodes (30, 31) comprennent une électrode centrale circulaire (30) et une électrode extérieure (31), dans lequel ladite électrode extérieure s'étend à un angle d'au moins 240°, en particulier à un angle d'au moins 270°, autour de ladite électrode centrale (30).

10. Le capteur de gaz selon l'une quelconque des revendications précédentes, dans lequel ledit chauffage (20) a une double symétrie de rotation autour d'un point central (25) et consiste en une première section (26) s'étendant le long d'un cercle autour dudit point central (25), une deuxième section (27) s'étendant le long dudit cercle, et une section radiale (28) reliant une première extrémité (26a) de ladite première section (26) à une première extrémité (27a) de ladite deuxième section (27), dans laquelle une deuxième extrémité (26b) de ladite première section (26) et une deuxième extrémité (27b) de ladite deuxième section (27) sont reliées à des conducteurs de chauffage (21) pour fournir un courant audit chauffage (20).

11. Le capteur de gaz selon l'une quelconque des revendications précédentes, dans lequel ledit capteur de température (34) et au moins l'une desdites électrodes (30, 31), en particulier les deux dites électrodes (30, 31), sont formés par la deuxième couche métallique (14).

12. Le capteur de gaz selon l'une quelconque des revendications précédentes, dans lequel une première (30) desdites électrodes est disposée sur une couche en dessous d'une deuxième (31) desdites électrodes.

13. Le capteur de gaz selon la revendication 123, dans lequel ladite première électrode (30) est formée par la première couche métallique (12) et ladite seconde électrode (31) est formée par la seconde couche métallique (14), et en particulier dans lequel lesdites première et seconde couches métalliques (12, 14) sont des couches de platine ou d'or.

14. Le capteur de gaz selon la revendication 13, dans lequel ladite première électrode (30) est formée par une troisième couche métallique (59) séparée desdites première et deuxième couches métalliques (12, 14), et en particulier
ladite troisième couche métallique (59) est disposée entre ladite première et ladite deuxième couche métallique (12, 14) ou
ladite troisième couche de métal (59) est disposée sous lesdites première et deuxième couches de métal (12, 14).

15. Le capteur de gaz selon l'une quelconque des revendications 12 à 14, dans lequel ladite première électrode (30) est disposée au fond d'un puits (51) s'étendant vers le haut à travers les couches métalliques et diélectriques au-dessus de ladite première électrode (30), et dans lequel ledit patch (8) de matériau de détection s'étend dans ledit puits (51) pour entrer en contact avec ladite première électrode (30), et en particulier dans lequel ladite deuxième électrode (31) est disposée de manière adjacente à une extrémité supérieure dudit puits (51).

16. Le capteur de gaz de l'une quelconque des revendications précédentes, dans lequel ledit capteur de température (34) est séparé dudit chauffage (20).

17. Le capteur de gaz selon l'une quelconque des revendications 1 à 156, dans lequel ledit capteur de température est formé par ledit chauffage (20), et en particulier dans lequel ledit chauffage (20) est en tungstène.

18. Le capteur de gaz selon l'une quelconque des revendications précédentes, comprenant au moins une ouverture (47, 49) s'étendant à travers ladite plaque chaude (6), et en particulier dans lequel ledit capteur de gaz comprend
une ouverture (47) s'étendant à travers un point central (25) de ladite plaque chaude (6) et/ou
plusieurs ouvertures (49) s'étendant de manière décentrée à travers ladite plaque chaude (6).

19. Le capteur de gaz selon l'une quelconque des revendications précédentes, comprenant des conducteurs de chauffage (21) s'étendant dans ledit pont (3) entre ledit chauffage (20) et ledit substrat (1), dans lequel lesdits conducteurs de chauffage (21) comprennent une pluralité d'ouvertures (45) remplies par un matériau diélectrique.

20. Le capteur de gaz selon l'une quelconque des revendications précédentes, comprenant en outre un circuit de traitement CMOS intégré sur ledit substrat (1) .

21. Le capteur de gaz selon l'une quelconque des revendications précédentes, dans lequel ledit pont (3) ne contient aucune couche de silicium, et en particulier dans lequel ledit pont (3) est constitué de couches diélectriques (11, 13, 15), de deux ou trois couches métalliques (12, 14) ainsi que dudit patch (8) de matériau de détection.

22. Le capteur de gaz selon l'une des revendications 1 à 8, dans lequel ladite région centrale (5) est reliée à au moins une barre (60), en particulier au moins deux barres (60) en plus d'être reliée aux bras (7) du pont (3), dans lequel ladite barre (60) s'étend entre ladite région centrale (5) et un pont voisin ou entre ladite région centrale (5) et ledit substrat (1), et en particulier dans lequel la ou lesdites barres (60) sont constituées d'au moins une couche diélectrique (11, 13, 15) et, éventuellement, de la au moins une desdites couches métalliques (12, 14, 59).

23. Le capteur de gaz selon l'une quelconque des revendications 1 à 8 ou 22 comprenant plusieurs ponts (3) .
